# EUROPEAN PATENT SPECIFICATION

(11) **EP 1 383 335 B1**
(45) Date of publication and mention of the grant of the patent: **04.07.2007**
(21) Application number: 03254401.7
(22) Date of filing: 11.07.2003
(51) Int. Cl.: H04N 7/24

(54) **Efficient method and system for delivering resources in broadcast environment**
Effizientes Verfahren und System zum Senden von Ressourcen in der Sendetechnik
Procédé et système efficient pour la diffusion de ressources

(30) Priority: 12.07.2002 US 395654 P
(43) Date of publication of application: 21.01.2004
(73) Proprietor: Ensequence, Inc., Portland, OR 97204 (US)
(72) Inventor: Wallace, Michael W., Vancouver WA 98683 (US); Westerman, Larry A., Portland OR 97210 (US)
(74) Representative: Williamson, Brian

(56) References cited:
- ETSI: "TS 101 812 - V.1.1.2 - Digital Video Broadcasting (DVB); Multimedia Home Platform (MHP) pages 267-300" 1 June 2002 (2002-06-01) , ETSI , ETSI XP002258657 * page 290 - page 293 *

## Description

This invention relates generally to computer systems and software applications therefor and, more specifically, to delivery of software resources.

A digital media transmission data stream contains a variety of different types of content. Digital satellite radio transmissions, for one example, include digital audio content for a number of different channels interspersed with data content. The data content includes information such as song titles, artist names, and other program-related information. Digital cable or satellite television transmissions, for another example, include audio and video content for a plurality of channels interspersed with data content. The data content includes programming schedules, channel mapping data, and other types of information. In both cases, a digital receiver/decoder receives and processes the data transmissions to present audio, video, and other data to the user.

A digital receiver capable of processing digital transmissions, such as a typical household television set top box ("STB") that processes digital television signals, allows for a possibility of further enhancing a user's experience by providing additional content. Just as closed-captioning or secondary audio programs have been transmitted along with analog television transmissions to enhance viewers' television enjoyment, so too could even more far-ranging types of additional content be transmitted to the STB to expand the viewer's experience in a digital television context. The STB constitutes at least a basic computer system and thus can generate additional audio and video content from data content interspersed within the stream of audio and video content. For example, if the program is a news program, breaking details or other headlines could be transmitted to the STB in the form of data blocks which the STB can decode and display to the user. Similarly, if the program is a sports program, scores, statistics, or audio commentary could be sent to the STB to be decoded for the viewer.

Furthermore, because of the inherent computing power in the STB, the STB could allow for interactive television that could be engaged by a user. For example, viewers could play along with game shows, participate in instant polling, and make purchases. The STB can serve as a terminal to allow users to interact with television broadcasts in much the same way that personal computers allow computer users to interact with the Internet. Applications, control buttons, images, text, and other data can be downloaded to the computer through the data stream to support and facilitate additional content and interactive programming.

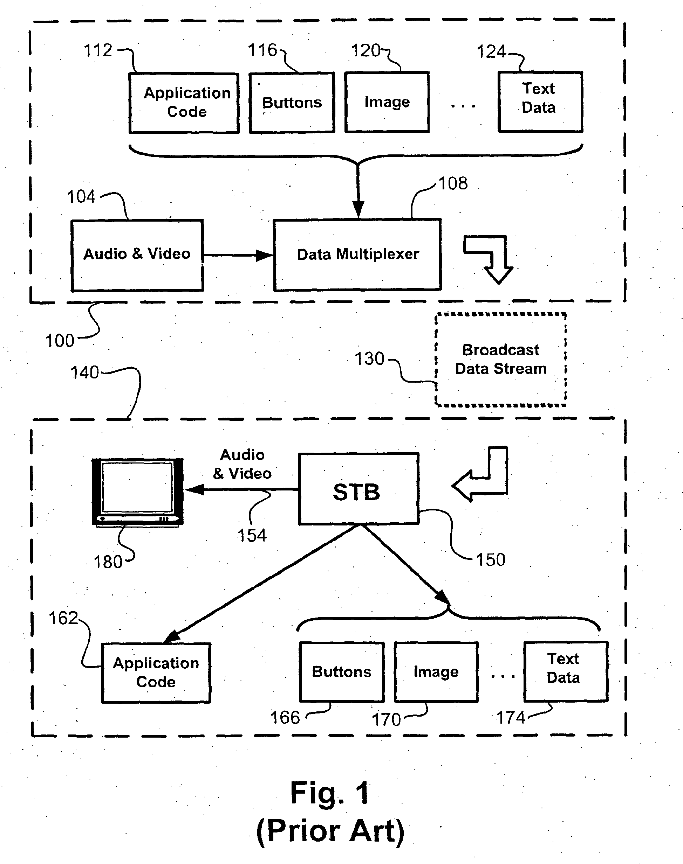

FIGURE 1 illustrates how additional content and interactive programming might be transmitted to a currently known STB where it can be engaged by a user. At a broadcast site 100, audio and video source material 104 along with application code 112, buttons 116, images 120, text data 124, and other data (not shown) are input to a data multiplexer 108. The data multiplexer 108 multiplexes the various inputs into a broadcast data stream 130 which is transmitted via satellite and/or cable to a receiving site 140. At the receiving site 140, the broadcast data stream 130 is processed and demultiplexed by the STB 150 into received audio and video material 154, application code 162, buttons 166, images 170, text data 174, and other data (not shown). Desired received audio and video material 154 can be selected by a user through the STB 150 and engaged through a television receiver 180, and the application code 162, buttons 166, images 170, text data 174, and other data (not shown) can be engaged by the user via the STB 150.

It will be appreciated that the depiction of FIGURE 1 somewhat simplifies the broadcast and reception processes, thereby obscuring some of the concerns confronted by program designers, broadcast engineers, and other participants in the field. A particular concern is the manner in which the audio and video source material 104, application code 112, buttons 116, images 120, text data 124, and other data (not shown) are actually multiplexed at the broadcast site 100 by the data multiplexer 108 and demultiplexed and processed by the STB 150 at the receiving site 140. The broadcast data stream 130 is composed of many discrete blocks of information which ultimately are processed by the STB 150 in order to allow for users to engage programs.

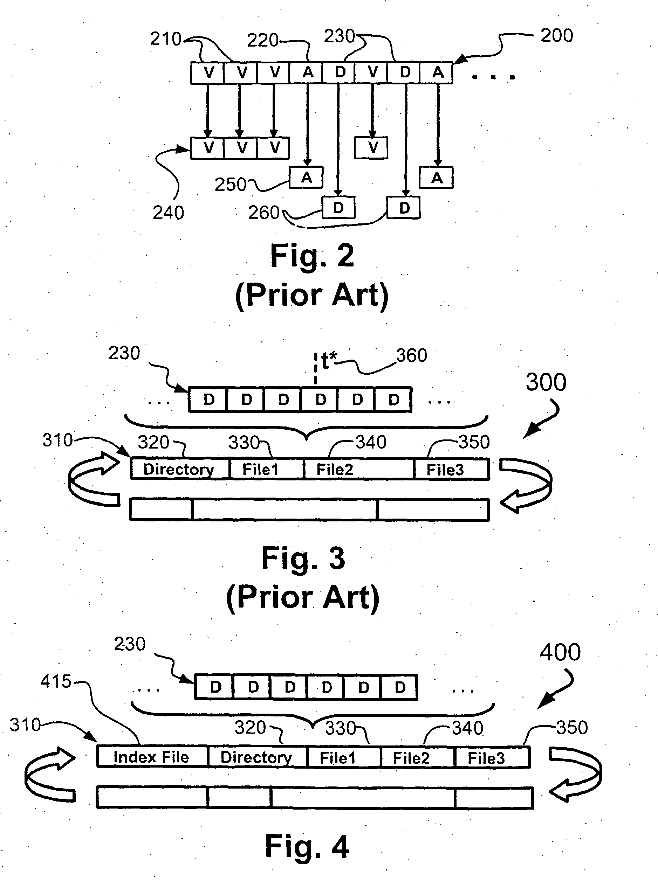

FIGURE 2 shows a representative digital television broadcast stream 200 currently known in the art. The broadcast stream contains a plurality of video blocks ("V") 210, audio blocks ("A") 220, and data blocks ("D") 230. Each of the blocks constitutes part of a packet, and each packet is labeled according to its type. For example, packets with packet indentifier ("PID") 0 have a special format which describes the location and/or identifier of other special packet types. Other PID values contain other types of data, the details of which are described in a program map table which provides a listing of the file types associated with each PID.

The different types of blocks are extracted from the data stream as shown and concatenated into coherent data streams which can be decoded for presentation to the user. Typically, these blocks are routed by a demultiplexer (not shown) which recognizes codes identifying the video blocks 210, audio blocks 220, and data blocks 230, and routes each to an appropriate buffer (not shown). For example, related video blocks 240 are collected from the data stream 200. These video blocks are routed to a buffer (not shown) and decoded for presentation to the viewer. Similarly, identified audio blocks 250 and identified data blocks 260 are drawn from the data stream and routed to the appropriate decoding means (not shown) for presenting their contents to the user. It will be appreciated that the majority of the blocks are video blocks 210 because video data typically consumes more data storage and bandwidth than other forms of data.

Two aspects of the foregoing illustration of the data stream 200 present particular concerns. First, the data blocks 230 join the broadcast data stream 200 in a "catch-as-catch-can" manner in terms of available bandwidth. As previously described and as will be appreciated, providing video and audio content consumes much of the available bandwidth. Transmitting additional content may involve inserting many additional data blocks 230 into the broadcast data stream 200. A typical digital television transmission utilizes a data stream composed of a great many small individual blocks. These blocks, termed transport-stream ("TS") packets, are fixed-size blocks encoded and decoded by lower-level layers in the transmission protocol. For example, in the case of the Motion Picture Experts Group standard for high speed digital transmissions (MPEG-2), each TS packet, whether containing video, audio, or other data, is 188 bytes in size. With a small building block with which to work, any even remotely sophisticated additional content takes many data blocks to communicate a directory of available files and the files themselves needed to provide additional content.

Second, a relatively large amount of storage could be consumed if all the incoming blocks were stored in the STB. Recording entire programs is performed using tapes, hard disks, or CD-ROMs, which exceed the capacity of buffer memory included in a typical STB 150 (FIGURE 1). Thus, buffer memory used to support continuous streaming of a selected program and any related additional content is a relatively precious resource. As with any precious resource, careful management is an important objective.

An additional concern regarding transmission of additional content is the fact that it may be desired that additional content be received and stored for later use. Audio and video blocks are collected, buffered, and presented to the user in substantially a real-time stream. Thus, if a user engages a program in progress, he or she engages the program from that point forward, and no provision need be made for capturing audio and video blocks transmitted before the user engaged the program. On the other hand, data carrying additional content, ranging from overlay graphics to audio commentary, may be spread across a great number of interspersed data blocks fit among the audio and video blocks for the entire program. Many data blocks needed to support additional content may have been transmitted before the user engaged the program. Nonetheless the previously-transmitted blocks may be called for at a later time when the additional content is initiated. Because such data is interspersed among the audio and video programming, one way to ensure availability of all the data desired for a particular additional content application is to repeatedly transmit the data in a recurring loop. In this manner, even if a user activates his or her STB after some desired data blocks already were sent, missed data blocks can be procured from a subsequent loop.

FIGURE 3 depicts such a currently known looping data construct, which is commonly termed a "data carousel" 300. The data carousel 300 is drawn from collected, isolated data blocks 230 (FIGURE 2), and addresses the concern described in the foregoing paragraph. Referring to FIGURE 3, for example, it will be assumed that one strand 310 of the data carousel is required to present a series of on-screen buttons. Presentation of these buttons is supported by a data structure composed of a directory 320 and three files, File 1 330, File 2 340, and File 3 350, each of which is associated with one of the series of on-screen buttons. Thus, in order to form the desired buttons, the STB uses the entire strand 310. For example, it may be assumed that a user activates the STB at a time t* 360 which is at an intermediate point during a transmission of data blocks constituting File 1 330. Some of the data blocks making up File 1 330 were received prior to t* 360, and thus File 1 330 will not be completely stored in the memory of the STB. However, the data strand 310 is part of a recurring loop 300 of data constructs being transmitted. Accordingly, if some of the data blocks making up File 1 330 were missed on a prior transmission, those data blocks can be acquired during a subsequent iteration of the data carousel 300, which is sent in a continuous revolution accounting for the name data "carousel" 300.

Two further concerns arise from the data carousel 300 construct for transmitting data blocks. First, as will be appreciated, much of the data in the data carousel 300 is retransmitted over and over again. There is no need for the STB to capture this data each time it is transmitted, and it would entail waste of STB processing resources to do so.

Second, and perhaps even more of a problem, is the determination of how to allocate buffer space in the STB for data carrying additional content. At present, there are at least four methods for allocating space for the data. In a first method, a fixed-size buffer for such data is allocated, and data blocks are directed into the buffer by the previously-described demultiplexer. If the volume of data blocks is too great to fit into the buffer, the demultiplexer initiates a request for an additional buffer from middleware or an operating system controlling the hardware. Once the additional buffer is granted, the demultiplexer can then continue storing the data blocks. However, the demultiplexer's request for additional storage buffers each time space is exceeded can slow the demultiplexing process for large blocks of data.

In a second method, more memory than is expected to be needed is allocated for the demultiplexer to store data blocks. The demultiplexer can then free unused storage for other uses within the STB. This method avoids the delay of the first method in immediately requesting more buffer space if initial data receptions exceed allocated space. On the other hand, the second method requires a larger-than-expected quantity of memory be reserved for data blocks. This may result in a waste of valuable hardware resources. The subsequent release of unused memory buffer space can ameliorate a wasteful initial allocation. However, once buffer space reaches the negotiated process previously described, this method then takes on the potential delay problems associated with the first method in both securing and releasing memory resources as appropriate.

In a third method, data transmissions can be limited to a fixed size or, at least, fixed size increments. This method thus reduces processing and loading delays resulting from the demultiplexer securing and releasing memory buffer space as appropriate. However, this third method limits the flexibility of the system by restricting the type or quantity of additional content for which the data will be used. Moreover, in honoring the fixed size limitations, applications may conservatively use allotted hardware resources. Thus, memory allotted for data blocks may be unused or underused, and some of that memory space would be wasted.

The fourth method is a hybrid of some of the previous methods. Once the system is initiated, buffers are initially allocated to a data size as determined by the data storage needs of the initial data sets received. The data buffer size allocated is then capped at the amount as specified by the initial data sets. While smaller data sets can be received, larger data sets will be refused. This method has an advantage in that it uses some actual representative usage of buffer space to set the memory buffer size allocated rather than using hypothesized file sizes. This method, however, also has disadvantages. For example, if the initially allocated buffer size is large, subsequently much of that buffer will be wasted. On another hand, if the allocated buffer size is too small, then the flexibility of the system to use larger data sets is restricted based on what happened to be a limiting initial data set size.

Beyond these methods, systems could attempt more flexible approaches to allocate memory buffer space. For example, using the DSM-CC protocol, defined as part of International Standard ISO-IEC 13818-6, a directory entry for a file contains a file size designation. This designation could be used by the demultiplexer to initiate reallocation requests in advance of receiving the file. However, the file size specified under this standard represents the size of the data as compressed within the broadcast stream. Because the data will be uncompressed to be used, and compressed file size varies greatly depending on the nature of the particular data being compressed, the specified file size may prove a poor indication of even the relative size of the uncompressed data files.

ETSI TS 101812 V1.2.1 provides a technical specification for Digital Video Broadcasting for a Multi Media Home Platform in which a data carousel includes a carousel ID descriptor as an MPEG file, which, as stated above, is a fixed-size block and relatively small.

Other relevant disclosure can be seen from (1) www.recnet.com/dab; (2) http://www.ibiquity.com/technology/documents/SY_TN_5032_000.pdf ; (3)
http://webapp.etsi.org/workprogram/Report_WorkItem.asp?WKI_ID-19901; (4)
www.iso.org/iso/en/CatalogueDetailPage.CatalogueDetail?CSNUMBER=31537&ICSI=35&ICS 2=40&ICS3=; (5)
www.iso.org/iso/en/CatalogueDetailPage.CatalogueDetail?CSNUMBER=25039&ICSI=35&ICS 2=40&ICS3=; and (6) www.opentv.com.

Thus, there is an unmet need in the art for efficiently recognizing modified files in a data carousel, and efficiently allocating memory buffer space for data blocks being read into STB memory.

Embodiments of the present invention provide for efficient use of resources in a set top box (STB) or other receiver used to process a broadcast data stream. The invention is defined by claims 1 and 9.

Thus, when the index file bearing the change indicator is detected, the receiver of the data stream seeks the data file that has been changed and replaces the superseded data file with the changed data file.

In accordance with further aspects of the invention, a receiver detecting the change indicator in the index file seeks the changed file from the data stream and replaces a superseded data file with the changed data file. In addition, the index file includes an index file version indicator which indicates a version of the index file, and thus indicates when the index file has been changed. Also, the index file includes file version indicators for files in the series of files with which the index file is associated. The file version indicators indicate when a file has been changed since receipt of a previous index block. Also, the index file includes a file size indicator allowing it to be determined which file or files have been changed and/or the size of a buffer or buffers to be allocated to receive the changed file or files.

The preferred and alternative embodiments of the present invention are described in detail below, by way of example only, with reference to the following drawings, in which:-
FIGURE 1 is a block diagram of the composition, transmission, and processing of a data stream used in a conventional prior art digital television transmission;
FIGURE 2 is a block diagram of a data stream of video, audio, and other data blocks used in a conventional prior art digital media transmission;
FIGURE 3 is a block diagram of a data carousel used in a conventional prior art digital media transmission;
FIGURE 4 is a block diagram of a data carousel incorporating an index file according to an embodiment of the present invention;
FIGURES 5A and 5B are block diagrams of an index file according to an embodiment of the present invention;
FIGURE 6 is a block diagram for creating and updating an index file at a transmission site according to an embodiment of the present invention;
FIGURE 7 is a block diagram for receiving and using an index file at a reception site according to an embodiment of the present invention;
FIGURE 8 is a block diagram of a data processing/media control transmission system using an index file of an embodiment of the present invention; and
FIGURE 9 is a block diagram of a data processing/media control reception system using an index file of an embodiment of the present invention.

Given by way of overview, embodiments of the present invention provide a method, a computer readable medium, and a data system for indicating when a superseded data file in a series of data files has been replaced with a changed data file. Using embodiments of the present invention, an index file is created and inserted in the series of data files. The index file includes a change indicator signifying that the changed data file has replaced the superseded data file. The index file is repeatedly transmitted with the series of data files.

FIGURE 4 shows a data carousel 400 incorporating an index file 415 according to an embodiment of the present invention. For the sake of simplifying the comparison with the prior art data carousel 300 (FIGURE 3), the data carousel 400 incorporates some of the elements of the data carousel 300 (FIGURE 3) including a directory 320 and three files, File 1 330, File 2 340, and File 3 350. Each of these common elements is numbered identically as in FIGURE 3 to emphasize that these elements do not have to be changed in accordance with the present invention. It will be appreciated that a noticeable change between the prior art data carousel 300 (FIGURE 3) and the data carousel 400 incorporating an embodiment of the present invention is the addition of the index file 415 to the data carousel 400. The index file 415 may span multiple data blocks. It will be appreciated that this spanning is like the other elements such as the directory 320 and the three files, File 1 330, File 2 340, and File 3 350. Just as with other elements, the index file 410 is recurringly transmitted.

Some of the principles of operation of the data carousel 400 resemble those of the prior art data carousel 300 (FIGURE 3). For example, data blocks 230 (FIGURE 2) are recurringly transmitted in the broadcast data stream 200, and are collected and buffered for use. It will be appreciated that a system using the data carousel 400 reacts differently to the recurring transmission of the elements of the data carousel 400. In a system using the data carousel 400 according to an embodiment of the present invention, once the system has been engaged and has buffered a set of the files 330, 340, and 350 that are listed in the directory 320 appropriate to current user selections, the system suitably will not load and buffer additional files until an index file 415 is received which indicates that contents of the index file and, therefore, other files in the data carousel 400, have changed. This is in contrast to a prior art data carousel in which the files might be continually read and buffered with each iteration in case any of the files has changed.

Accordingly, the system using one presently preferred embodiment of the present invention would save the resources and/or time required to read and buffer files which are identical to their predecessors. Instead, the present invention advantageously would read and buffer new files only when one or more changes have been made in the files. In one presently preferred embodiment, only files that actually have been changed are read and buffered, as will be further discussed below, thereby saving even further resources and/or time. However, it is still in keeping with the broad principles of the present invention if multiple files or all files in the data carousel are read and buffered each time a change is made in the index file 415 to signify that at least some change in one or more of the files in the data carousel 400 has been made.

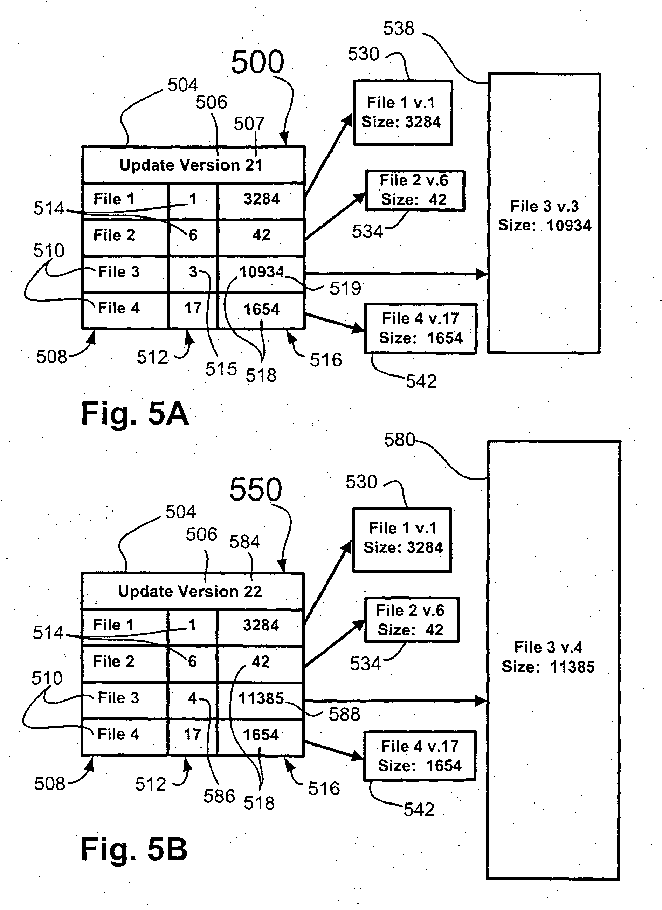

FIGURE 5A shows a more detailed view of an exemplary index file 500 according to the present invention. In one presently preferred embodiment, the index file 500 has four parts: an index file version field 504; a file list 508; a file version list 512; and a file size list 516. The index file version field 504 is updated each time the index file 500 is changed from a previous version. The file list 508 lists the other files in the data carousel associated with the index file 500. The file version list 512 lists a current version identifier of each of the files listed in the file list 508. The file size list 516 lists the current size of each file listed in the file list 508. In one presently preferred embodiment, there is a one-to-one correspondence between the file list 508, the file version list 512, and the file size list 516. Therefore, the lists 508, 512, and 516 logically can be conceived of as a table with values in each column of each row for associating the appropriate values with the appropriate files.

The index file version field 504 indicates when the index file 500 is changed, thereby indicating when one or more of the files in the data carousel represented by the index file 500 has been changed. The index file version value 506 in the index file version field 504 can signify a change in the index file 500 in a number of ways. An index file version value 506 stored as the index file version 504 suitably is incremented, changed back and forth between a limited set of established values, or otherwise changed. As will be appreciated, it is the changing of the index file version value 506 stored in the index file version 504 from a previous version identifier to a next version identifier that matters, and not to what value the index file version value 506 changes that is significant.

The rest of the elements of the index file 500 logically create a table listing current attributes about each of the files 510 listed in the file list 508. For each file 510 listed in the file list 508, a current file version value 514 is listed in the file version list 512. As previously described in connection with index file version value 506 stored in the index file version field 504, the file version values 514 used in the file version list 512 could signify a change in a number of ways. A file version value 514 stored in the file version list 512 could be incremented, changed back and forth between a limited set of established values, or otherwise changed. As will be appreciated, it is the changing of the file version value 514 in the file version list 512 from a previous version identifier to a next version identifier that is significant, not the specific value to which the file version value 514 is changed. Also, for each of the files 510 listed in the file version list 512, a file size 518 is listed in the file size list 516. The file size 518 listed in the file size list 516 suitably is used to allocate buffer space for changed files, as will be further described.

As previously mentioned, the index file 500 is recurringly transmitted with the other files 510 in the data carousel with which the index file 500 is associated. If none of the files 510 are changed, the index file 500 remains unchanged, and advantageously the files 510 in the data carousel are not loaded or buffered. It is when the index file 500 is changed to reflect a change being made in one of the files 510 that the system using an embodiment of the present invention acts upon information contained in the index file 500.

Operation and effect of the index file 500 can be illustrated by describing what transpires when the index file 500 is replaced with an updated index file 550 as shown in FIGURE 5B. FIGURE 5A shows how the index file 500 for a series of files, File 1 v.1 530, File 2 v.6 534, File 3 v.3 538, and File 4 v.17 542. As also shown FIGURE 5A, the index file 500 contains current information about each of the files 530, 534, 538, and 542. Specifically, the index file lists the names of the files in the file list 508, the version of each of the files in the file version list 512, and the size of each of the files in the file size list 516. Also, the index file lists its current version value 506 as "21" in the index file version field 504. If, in this example, the index file version field 504 is incremented by one integer value each time it is changed starting from a value of zero, the index file 500 has been changed 21 times to reflect a corresponding number of instances in which the associated files 530, 534, 538, and 542 were changed.

FIGURE 5B shows an updated index file 550 for the same series of files 530, 534, 538, and 542 in which one of the files, File 3 v.3 538 (FIGURE 5A), having a file size of 10934, has been superseded by File 3 v.4 580, having a file size of 11385. Because File 3 v.3 538 (FIGURE 5A) has been replaced by File 3 v.4 580 (FIGURE 5B), an updated index file 550 is inserted into the data carousel containing these files. This indicates to the system making use of an embodiment of the present invention that a file in the carousel has been changed.

Because the change between the carousels represented by index files 500 and 550 (FIGURES 5A and 5B, respectively) involves a version change of File 3 from File 3 v.3 538 of size 10934 (FIGURE 5A) to File 3 v.4 580 of size 11385 (FIGURE 5B), three changes are made to update the index file 500 to create the updated index file 550. First, the index file version value 507 of "21" is changed to the updated index file version value of "22" 584. Second, in the file version list 512, the file version value 514 of "3" for File 3 515 is changed from to its updated version value 586 of "4" for File 3. Finally, in the file size list 516, the file size value 518 of "10934" 519 for File 3 is changed to the updated file size value 588 of "11385" for File 3. With this information in the updated index file 550 (FIGURE 5B), the system using an embodiment of the present invention advantageously can be informed of changes in one or more files in the data carousel without having to constantly load and buffer unchanged data files, saving time and resources.

Continuing with this example, it may be assumed that the system already has received a set of data files 530, 534, 538, and 542 represented by the index file 500. The system scans the carousel for an updated index file 550 by scanning for packets bearing an index file PID, as previously described. Upon finding a packet with an index file PID, the system checks the packet to determine if the index file version value 506 had changed since the last index file was received. If the index file version value 506 is the same as the last index file version received, the system takes no action. On the other hand, if the index file version value 506 has changed from a previous value, the system reads in the updated index file 550 as a first step in securing updated files from the data carousel.

After loading the updated index file, in one presently preferred embodiment, the next step is to check the file version list 512 to determine which of the files has been updated since the previous index file was received. Specifically, the file version values 514 are checked to see which have changed. Here, because the file version of File 3 has changed to version "4" 586, while the other file version values have remained the same, the changed file has been identified. Having identified the changed file, the file size list 516 is checked for File 3 580, and the changed file size "11385" 588 is read. Finding the size of the changed file, the system then allocates a buffer (not shown) capable of accommodating the changed file size "11385" 588. The changed File 3 580 is then read into this buffer. The buffer holding the superseded previous File 3 538 is then released so that the memory space consumed by that buffer can be used for subsequently received files or other purposes.

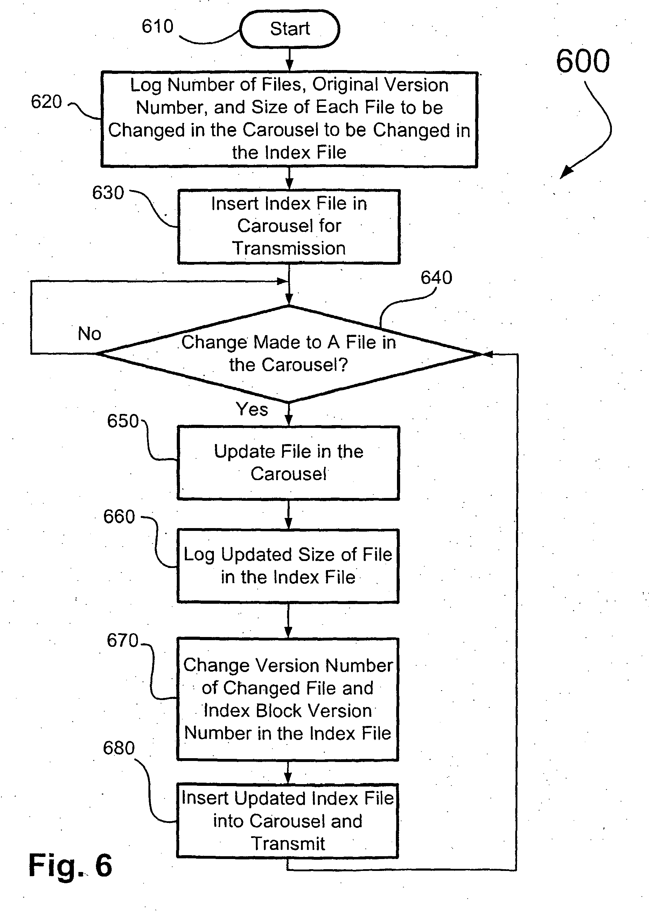

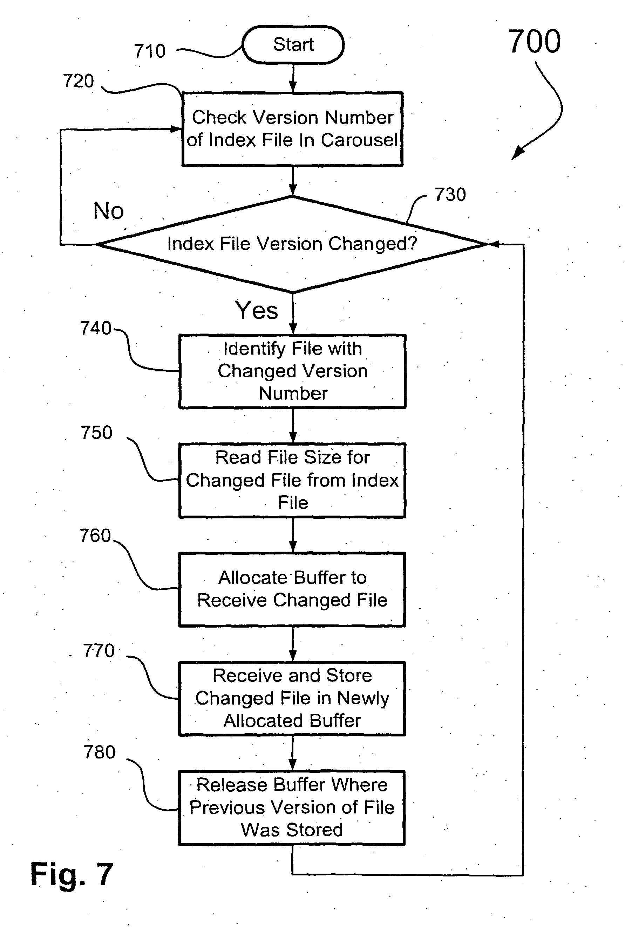

FIGURES 6 and 7 describe in flowchart form routines for generating and utilizing index files, respectively. Referring to FIGURE 6, a routine for generating index tables begins at a block 610. At a block 620, an original index file is created by logging a number of files in the relevant carousel, each of which may be changed during the broadcast; an original version number for each file; and an original size for each file. The data collected are logged in the appropriate lists as described in connection with FIGURES 5A and 5B. At a block 630, the index file is inserted into the data carousel and transmitted along with the files with which the index file is associated.

At a decision block 640, it is determined if any changes have been made to files associated with the index file. If not, the routine loops through the decision block 640 until one of the associated files is changed. When an associated file is changed, at a block 650 the changed file is inserted into the carousel. At a block 660, a changed file size for the changed file is logged in the index file. At a block 670, a file version for the file and an index file version for the index file are changed. At a block 680, the revised index file is inserted into the data carousel in the place of the previous version of the index file and transmitted. The routine continues by checking to see if files in the carousel have changed at the decision block 640.

Referring to FIGURE 7, a routine 700 for utilizing the index table begins at a block 710. At a block 720, an index file version in the index file received in the carousel is checked. At a decision block 730 it is determined if the index file version has changed since the previous index file was reviewed. It will be appreciated that, instead of checking a version of the index file, a system could individually check the file versions listed in the index file or check the file sizes listed to see if they have changed. In any case, if indications in the index file show that the index file has not changed, the routine loops through the decision block 730 until the index file version has changed. When the index file version has changed, at a block 740 the file which has changed is identified. In one presently preferred embodiment, whether a file has changed is determined by checking a file version number. Alternatively, whether a file has changed also could be determined by comparing a file size to determine if it has changed from the preceding index file.

Once the changed file or files have been identified, at a block 750 the changed file size is read from the index table. At a block 760, a buffer of suitable size is allocated to accommodate the changed file, regardless of whether the changed file is a same size, a larger size, or a smaller size. At a block 770, the changed file is read into the newly allocated buffer. At a block 780, the buffer holding the superseded previous version of the file is released so that the memory space used by the buffer can be put to other uses. The routine continues by checking to see if a version of a received index file has changed at the decision block 730.

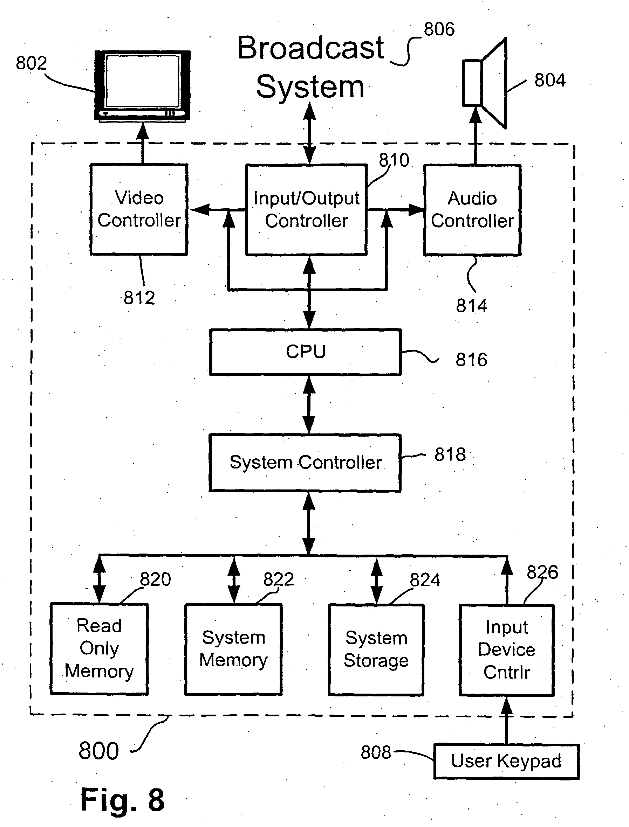

FIGURE 8 shows a computer system configured as a data processing/media control transmission system 800 operable for using embodiments of the present invention. The computer system 800 is operable for controlling a display 802, such as a television, and an audio subsystem 804, such as a stereo or a loudspeaker system for monitoring transmission of audio, video, and data transmissions. The system 800 transmits through a broadcast system 806. The system 800 suitably is controlled by user input from a wired or wireless user keypad 808.

The system 800 transmits through the broadcast system 806 via an input/output controller 810, which directs signals to and from a video controller 812, an audio controller 814, and a central processing unit ("CPU") 816. The input/output controller 810 suitably is a multiplexer for routing video data blocks, audio data blocks, and other data blocks routed through and/or generated by the system 800 to a CPU 816 for processing and multiplexing. The CPU 816 communicates through a system controller 818 with input and storage devices such as read only memory ("ROM") 820, system memory 822, system storage 824, and input device controller 826. The system 800 shown in FIGURE 8 thus can generate and/or transmit data blocks through the broadcast system. It will also be appreciated that the CPU 816 and associated components is operable to format and generate the index files according to the present invention.

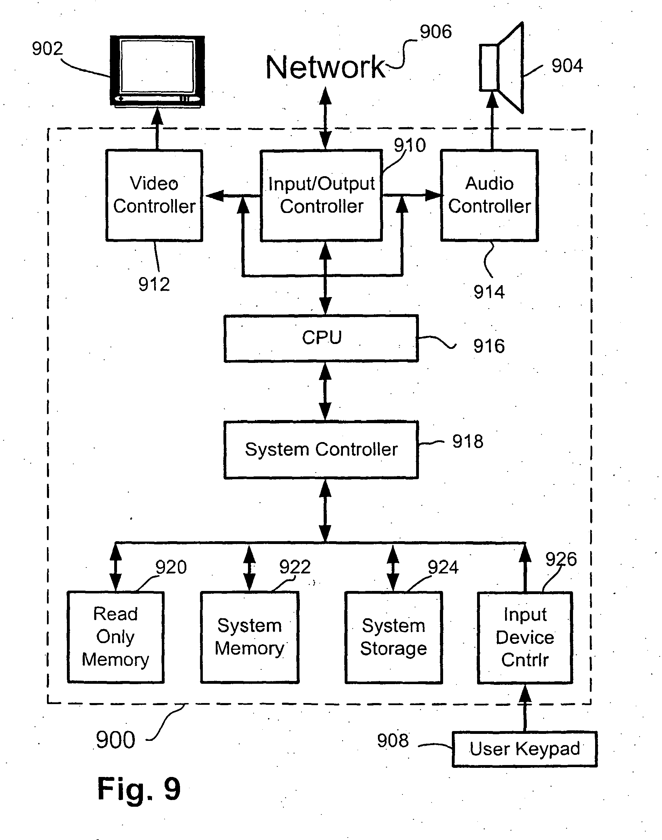

FIGURE 9 shows a computer system configured as a data processing/media control reception system 900 operable for using embodiments -of the present invention. The system 900, instead of transmitting data through a broadcast system 806 (FIGURE 8), receives data from a network 906 such as a broadband digital cable network, digital satellite network, or other data network. As opposed to generating and multiplexing data, the system 900 receives audio, video, and data content from the network 906. The system 900 suitably is a STB for for controlling a display 902, such as a television, and an audio subsystem 904, such as a stereo or a loudspeaker system. The system 900 also receives user input from a wired or wireless user keypad 908, which may be in the nature of a STB remote.

The system 900 receives input from the network 906 via an input/output controller 910, which directs signals to and from a video controller 912, an audio controller 914, and a central processing unit (CPU) 916. In the case of a STB, the input/output controller 910 suitably is a demultiplexer for routing video data blocks received from the network 906 to a video controller 912 in the nature of a video decoder, audio data blocks to an audio controller 914 in the nature of an audio decoder, and for routing other data blocks to a CPU 916 for processing. In turn, the CPU 916 communicates through a system controller 918 with input and storage devices such as ROM 920, system memory 922, system storage 924, and input device controller 926.

The system 900 shown in FIGURE 9 thus can receive incoming data files of various kinds, including the index files according to the present invention. The system 900 can react to the index files for receiving and processing changed data files received from the network 906.

While the preferred embodiment of the invention has been illustrated and described, as noted above, many changes can be made without departing from the scope of the invention. Accordingly, the scope of the invention is not limited by the disclosure of the preferred embodiment. Instead, the invention should be determined entirely by reference to the claims that follow.

## Claims

1. A method for indicating when a superseded data file in a series of data files has been replaced with a changed data file, the method comprising:
replacing (650) a superseded data file (500) in a series of data files (320, 330, 340, 350) provided in a data broadcast carousel (300) with a changed data file (550);
creating (670) an index file (415), the index file (415) including a change indicator signifying that the changed data file (550) has replaced the superseded data file (500);
inserting (680) the index file in the data broadcast carousel; and
repeatedly transmitting the index file (415) with the series of data files by revolution of the data broadcast carousel.

2. The method of claim 1, further comprising maintaining the change indicator in the index file (415), maintaining the change indicator including:
maintaining a version indicator in the index file (415);
changing the version indicator in the index file (415) when the superseded data file (500) has been replaced with the changed data file; and
inserting a changed file size (588) for the changed data file (550) in the index file.

3. The method of claim 2, wherein the version indicator is changed by incrementing the version indicator when the superseded data file (500) has been replaced with the changed data file(550).

4. The method of claim 2 or 3, wherein the version indicator includes an index file version indicator (506) indicating the version of the index file (415).

5. The method of claim 4, wherein the index file version indicator (506) is changed when any of a series of data files has been changed.

6. The method of claim 2, 3, 4 or 5, wherein the version indicator includes a file version indicator (512) for indicating a version of the changed data file (550).

7. A computer readable medium comprising computer program code means which, when executed on a computer, indicate when a superseded data file (500) in a series of data files has been replaced with a changed data file (550) in accordance with the method defined in any one of claims 1 to 6.

8. A computer loaded with the computer program code means defined in claim 7.

9. A media transmission control system for indicating when a superseded data file in a series of data files has been replaced with a changed data file, the system' comprising:
a processor including:
a first component configured to a replace a superseded data file (500) with a changed data file in a series of data files provided in a data broadcast carousel (300); and
a second component configured to create an index file (415), the second component generating a change indicator signifying that the changed data file has replaced the superseded data file (500);
the second component being configured to insert the index file in the data broadcast carousel (300); and
a transmitter coupled to the processor, the transmitter being configured to repeatedly transmit the index file (415) with the series of data files by revolution of the data broadcast carousel.

10. The system of claim 9, wherein the change indicator in the index file (415) includes:
a version indicator, the version indicator being changed when the superseded data file (500) has been replaced with the changed data file (550); and
a changed file size for the changed data file in the index file (415).

11. The system of claim 10, wherein the second component is further configured to increment the version indicator when the superseded data file (500) has been replaced with the changed data file (550).

12. The system of claim 10 or 11, wherein the version indicator includes an index file version indicator indicating the version of the index file.

13. The system of claim 12, wherein the second component is further configured to change the index file version indicator when any of a series of data files has been changed.

14. The system of any one of claims 9 to 13, wherein the version indicator includes a file version indicator for indicating a version of the changed data file.

## Patentansprüche

1. Verfahren zum Anzeigen, wenn eine ersetzte Datendatei in einer Reihe von Datendateien durch eine geänderte Datendatei ausgetauscht worden ist, mit den Schritten:
Ersetzen (650) einer ersetzten Datendatei (500) aus einer Reihe von Datendateien (320, 330, 340, 350), welche in einem Datensendekarussell (300) vorgesehen ist, durch eine geänderte Datendatei (550);
Erzeugen (670) einer Indexdatei (415), wobei die Indexdatei (415) einen Änderungsindikator aufweist, welcher anzeigt, dass die geänderte Datendatei (550) eine ersetzte Datendatei (500) ersetzt hat;
Einfügen (680) der Indexdatei in das Datensendekarussell, und
wiederholtes Senden der Indexdatei (415) mit der Reihe von Datendateien durch Drehung des Datensendekarussells.

2. Verfahren nach Anspruch 1, ferner mit dem Schritt: Aufrechterhalten eines Änderungsindikators in der Indexdatei (415), wobei das Aufrechterhalten des Änderungsindikators aufweist:
Aufrechterhalten eines Versionsindikators in der Indexdatei (415),
Ändern des Versionsindikators in der Indexdatei (415), wenn die ersetzte Datendatei (500) durch die geänderte Datendatei ersetzt worden ist, und
Einfügen einer geänderten Datengröße (588) für die geänderte Datendatei (550) in der Indexdatei.

3. Verfahren nach Anspruch 2, wobei der Versionsindikator durch Erhöhen des Versionsindikators geändert wird, wenn die ersetzte Datendatei (500) durch die geänderte Datendatei (550) ersetzt worden ist.

4. Verfahren nach Anspruch 2 oder 3, wobei der Versionsindikator einen Indexdatei-Versionsindikator (506) aufweist, welcher die Version der Indexdatei (415) anzeigt.

5. Verfahren nach Anspruch 4, wobei der Indexdatei-Versionsindikator (506) geändert wird, wenn eine der Datendateien in der Reihe von Datendateien geändert wurde.

6. Verfahren nach Anspruch 2, 3, 4 oder 5, wobei der Versionsindikator einen Dateiversionsindikator (512) aufweist, welcher eine Version der geänderten Datendatei (550) anzeigt.

7. Computerlesbares Medium mit einem Computerprogrammcodemittel, welches, wenn es auf einem Computer ausgeführt wird, anzeigt, wenn eine ersetzte Datendatei (500) in einer Reihe von Datendateien durch eine geänderte Datendatei (550) gemäß dem Verfahren nach einem der Ansprüche 1 bis 6 ersetzt worden ist.

8. Computer, welcher mit dem Computerprogrammcodemittel gemäß Anspruch 7 geladen ist.

9. Medienübertragungssteuersystem zum Anzeigen, wenn eine ersetzte Datendatei in einer Reihe von Datendateien durch eine geänderte Datendatei ersetzt worden ist, mit einem Prozessor, der aufweist:
eine erste Komponente, welche dazu ausgestaltet ist, eine ersetzte Datendatei (500) durch eine geänderte Datendatei in einer Reihe von Datendateien zu ersetzen, welche in einem Datensendekarussell (300) vorgesehen sind, und
einer zweiten Komponente, welche dazu ausgestaltet ist, eine Indexdatei (415) zu erzeugen, wobei die zweite Komponente einen Änderungsindikator erzeugt, welcher anzeigt, dass die geänderte Datendatei die ersetzte Datendatei (500) ersetzt hat, wobei die zweite Komponente dazu ausgestaltet ist, die Indexdatei in das Datensendekarussell (300) einzufügen, und
einem Transmitter, welcher mit dem Prozessor gekoppelt ist, wobei der Transmitter dazu ausgestaltet ist, wiederholt die Indexdatei (415) mit der Reihe von Datendateien durch Drehen des Datensendekarussells zu übertragen.

10. System nach Anspruch 9, wobei der Änderungsindikator in der Indexdatei (415) aufweist:
einen Versionsindikator, wobei der Versionsindikator geändert wird, wenn die ersetzte Datendatei (500) durch die geänderte Datendatei (550) ersetzt worden ist, und
eine geänderte Datengröße für die geänderte Datendatei in der Indexdatei (415).

11. System nach Anspruch 10, wobei die zweite Komponente ferner dazu ausgestaltet ist, den Versionsindikator zu erhöhen, wenn die ersetzte Datendatei (500) durch die geänderte Datendatei (550) ersetzt worden ist.

12. System nach Anspruch 10 oder 11, wobei der Versionsindikator einen Indexdatei-Versionsindikator aufweist, welcher die Version der Indexdatei anzeigt.

13. System nach Anspruch 12, wobei die zweite Komponente ferner dazu ausgestaltet ist, den Indexdatei-Versionsindikator zu ändern, wenn eine Datendatei der Reihe von Datendateien geändert worden ist.

14. System nach einem der Ansprüche 9 bis 13, wobei der Versionsindikator einen Dateiversionsindikator zum Anzeigen einer Version der geänderten Datendatei aufweist.

## Revendications

1. Procédé pour indiquer le moment où un fichier de données périmées dans une série de fichiers de données a été remplacé par un fichier de données modifiées, le procédé comprenant les étapes consistant à :
remplacer (650) un fichier de données périmées dans une série de fichiers de données (320, 330, 340, 350) dans une plate-forme tournante de diffusion de données (300) par un fichier de données modifiées (550) ;
créer (670) un fichier d'index (415), le fichier d'index (415) comprenant un indicateur de modification signifiant que le fichier de données modifiées (550) a remplacé le fichier de données périmées (500) ;
introduire (680) le fichier d'index dans la plate-forme de diffusion de données ; et
transmettre de façon répétée le fichier d'index (415) avec la série de fichiers de données en faisant tourner la plate-forme de diffusion de données.

2. Procédé selon la revendication 1, comprenant de plus le maintien de l'indicateur de modification dans le fichier d'index (415), en maintenant l'indicateur de modification comprenant les opérations consistant à :
conserver un indicateur de version dans le fichier d'index (415) ;
modifier l'indicateur de version dans le fichier d'index (415) lorsque le fichier de données périmées (500) a été remplacé par le fichier de données modifiées ; et
introduire un format de fichier modifié (588) pour le fichier de données modifiées (550) dans le fichier d'index.

3. Procédé selon la revendication 2, dans lequel l'indicateur de version est modifié en incrémentant l'indicateur de version lorsque le fichier de données périmées (500) a été remplacé par le fichier de données modifiées (550).

4. Procédé selon la revendication 2 ou 3, dans lequel l'indicateur de version comprend un indicateur de version de fichier d'index (506) indiquant la version du fichier d'index (415).

5. Procédé selon la revendication 4, dans lequel l'indicateur de version de fichier d'index (506) est modifié lorsque l'une quelconque d'une série de fichiers de données a été modifiée.

6. Procédé selon la revendication 2, 3, 4 ou 5, dans lequel l'indicateur de version comprend un indicateur de version de fichier (512) pour indiquer une version du fichier de données modifiées (550).

7. Support de lecture d'ordinateur comprenant des moyens de code de programme d'ordinateur qui, lorsqu'ils sont exécutés sur un ordinateur, indiquent lorsqu'un fichier de données périmées (500) dans une série de fichiers de données a été remplacé par un fichier de données modifiées (550) selon le procédé défini dans l'une quelconque des revendications 1 à 6.

8. Ordinateur chargé de moyens de code de programme d'ordinateur définis dans la revendication 7.

9. Système de commande de transmission de support pour indiquer le moment où un fichier de données périmées dans une série de fichiers de données a été remplacé par un fichier de données modifiées, le système comprenant :
un processeur incorporant :
un premier composant configuré pour remplacer un fichier de données périmées (500) par un fichier de données modifiées dans une série de fichiers de données disposés dans une plate-forme tournante de diffusion de données (300) ; et
un second composant configuré pour créer un fichier d'index (415), le second composant générant un indicateur de modification signifiant que le fichier de données modifiées a remplacé le fichier de données périmées (500) ;
le second composant étant configuré pour introduire le fichier d'index dans la plate-forme tournante de diffusion de données (300) ; et
un transmetteur couplé au processeur, le transmetteur étant configuré pour transmettre de façon répétée le fichier d'index (415) avec la série de fichiers de données par rotation de la plate-forme tournante de diffusion de données.

10. Système selon la revendication 9, dans lequel l'indicateur de modification dans le fichier d'index (415) comprend :
un indicateur de version, l'indicateur de version étant modifié lorsque le fichier de données périmées (500) a été remplacé par le fichier de données modifiées (550) ; et
un format de fichier modifié pour le fichier de données modifiées dans le fichier d'index (415).

11. Système selon la revendication 10, dans lequel le second composant est configuré, de plus, pour incrémenter l'indicateur de version lorsque le fichier de données périmées (500) a été remplacé par le fichier de données modifiées (550).

12. Système selon la revendication 10 ou 11, dans lequel l'indicateur de version comprend un indicateur de version de fichier d'index indiquant la version du fichier d'index.

13. Système selon la revendication 12, dans lequel le second composant est, de plus, configuré pour modifier l'indicateur de version de fichier d'index lorsque l'une quelconque d'une série de fichiers de données a été modifiée.

14. Système selon l'une quelconque des revendications 9 à 13, dans lequel l'indicateur de version comprend un indicateur de version de fichier pour indiquer une version du fichier de données modifiées.
